# EUROPÄISCHE PATENTANMELDUNG

(11) **EP 2 330 038 A1**
(43) Veröffentlichungstag der Anmeldung: **08.06.2011**
(21) Anmeldenummer: 10450182.0
(22) Anmeldetag: 24.11.2010
(51) Int. Cl.: B64F 1/36, B65G 37/02

(54) **Vorrichtung zur Sicherheitsüberprüfung von Gegenständen**

(30) Priorität: 25.11.2009 AT 18732009
(71) Anmelder: motion06 engineering gmbh, 5202 Neumarkt am Wallersee (AT)
(72) Erfinder: Brunninger, Markus, 5204 Straßwalchen (DE)
(74) Vertreter: Hübscher, Helmut

(57) **Zusammenfassung**

Es wird eine Vorrichtung zur Sicherheitsüberprüfung von Gegenständen mit einer Bilderfassungseinrichtung (1) für die Gegenstände und einer Fördereinrichtung (2) für die Gegenstände aufnehmende Behälter beschrieben, wobei die Fördereinrichtung (2) eine Förderstrecke (3) mit einem der Bilderfassungseinrichtung (1) vorgeordneten Aufgabeabschnitt (6) und einem der Bilderfassungseinrichtung (1) nachgeordneten Entnahmeabschnitt (7) sowie eine unterhalb der Förderstrecke (3) vorgesehene Rücklaufstrecke (4) für die leeren Behälter aufweist. Um vorteilhafte Rückführbedingungen für die leeren Behälter zu schaffen, wird vorgeschlagen, dass die Fördereinrichtung (2) eine an den Entnahmeabschnitt (7) der Förderstrecke (3) angeschlossene, um zumindest 180**°** geführte Umlenkstrecke (5) mit einer zur Rücklaufstrecke (4) abfallenden Verbindungsstrecke (8) bildet und dass die Rücklaufstrecke (4) einen gegen den Aufgabeabschnitt (6) der Förderstrecke (3) ansteigenden, diesem gegenüber vorstehenden Endabschnitt (9) umfasst.

## Beschreibung

Die Erfindung bezieht sich auf eine Vorrichtung zur Sicherheitsüberprüfung von Gegenständen mit einer Bilderfassungseinrichtung für die Gegenstände und einer Fördereinrichtung für die Gegenstände aufnehmende Behälter, wobei die Fördereinrichtung eine Förderstrecke mit einem der Bilderfassungseinrichtung vorgeordneten Aufgabeabschnitt und einem der Bilderfassungseinrichtung nachgeordneten Entnahmeabschnitt sowie eine unterhalb der Förderstrecke vorgesehene Rücklaufstrecke für die leeren Behälter aufweist.

Vorzugsweise in Flughäfen zum Einsatz kommende Vorrichtungen zur Sicherheitsüberprüfung von Gegenständen umfassen üblicherweise eine Bilderfassungseinrichtung, die die zu überprüfenden Gegenstände mit Hilfe von Wellen oder Strahlen, beispielsweise Röntgenstrahlen oder Mikrowellen, erfasst und auf einem Bildschirm abbildet. Die zu überprüfenden Gegenstände werden von einem Behälter aufgenommen und mittels einer Fördereinrichtung an der Bilderfassungseinrichtung vorbeigefördert. Die ablaufseitig der Bilderfassungseinrichtung entleerten Behälter müssen vom Entnahmeabschnitt der Förderstrecke zum Aufgabeabschnitt zurückgebracht werden, was üblicherweise von Hand aus erfolgt. Es wurde aber auch schon vorgeschlagen, hiefür eine Rücklaufstrecke vorzusehen, die unterhalb der Förderstrecke vorgesehen ist, um Platz zu sparen. Diese Rücklaufstrecken für die leeren Behälter bedingen aber eine konstruktiv aufwendige Hubeinheit, um die leeren Behälter im Anschluss an den Entnahmeabschnitt von der Förderstrecke auf die Rücklaufstrecke abzusenken und am Ende der Rücklaufstrecke wieder auf die Höhe des Aufgabeabschnitts der Förderstrecke anzuheben. Außerdem treten im Bereich der Hubeinheiten immer wieder Funktionsstörungen zufolge nicht ordnungsgemäß überführter Behälter auf.

Der Erfindung liegt somit die Aufgabe zugrunde, eine Vorrichtung der eingangs geschilderten Art zur Sicherheitsprüfung von Gegenständen so auszugestalten, dass eine konstruktiv wenig aufwendige, störungsfreie Rückführung der leeren Behälter vom Entnahmeabschnitt zum Aufgabeabschnitt der Förderstrecke gewährleistet werden kann.

Die Erfindung löst die gestellte Aufgabe dadurch, dass die Fördereinrichtung eine an den Entnahmeabschnitt der Förderstrecke angeschlossene, um zumindest 180**°** geführte Umlenkstrecke mit einer zur Rücklaufstrecke abfallenden Verbindungsstrecke bildet und dass die Rücklaufstrecke einen gegen den Aufgabeabschnitt der Förderstrecke ansteigenden, diesem gegenüber vorstehenden Endabschnitt umfasst.

Zufolge der an den Entnahmeabschnitt der Förderstrecke anschließenden Umlenkstrecke können die im Bereich des Entnahmeabschnitts geleerten Behälter entlang der Umlenkstrecke in die zur Förderstrecke gegensinnige Rücklaufrichtung umgelenkt und in einfacher Weise über die anschließende, abfallende Verbindungsstrecke der Rücklaufstrecke zugeführt werden, um entlang der Rücklaufstrecke unterhalb der Förderstrecke wieder zum Aufgabeabschnitt der Förderstrecke gefördert zu werden. Der gegen den Aufgabeabschnitt der Förderstrecke ansteigende, diesem Aufgabeabschnitt gegenüber vorstehende Endabschnitt stellt sicher, dass die leeren Behälter ohne aufwendige Hubeinheit wieder im Wesentlichen auf das Förderniveau der Förderstrecke angehoben werden, sodass das Überführen der leeren Behälter vom Endabschnitt der Rücklaufstrecke auf den Aufgabeabschnitt der Förderstrecke von Hand aus ohne Aufwand möglich wird. Mit der Umlenkung der leeren Behälter entlang der Umlenkstrecke um eine quer zur Förderfläche verlaufende Achse wird nicht nur die Rückführung der leeren Behälter ohne Hubeinheit eingeleitet, sondern auch der Entnahmeabschnitt der Förderstrecke gegebenenfalls um zumindest einen Teil der Umlenkstrecke verlängert, was die Abfertigung der eine solche Sicherheitsschleuse passierenden Personen beschleunigen kann.

Obwohl es im Wesentlichen nur auf die Förderung der Behälter entlang der Fördereinrichtung ankommt und nicht auf die Ausbildung der einzelnen Förderstrecken, ergeben sich besonders vorteilhafte Konstruktionsbedingungen, wenn die Umlenkstrecke der Fördereinrichtung als Rollmatte ausgebildet ist, die in einer Tischfläche vorgesehene Rollkörper aufweist, sodass sich eine weitgehend geschlossene Tischfläche mit dem Vorteil ergibt, dass neben einen Behälter gefallene Gegenstände aufgefangen werden.

In der Zeichnung ist der Erfindungsgegenstand beispielsweise dargestellt. Es zeigen
- Fig. 1: eine erfindungsgemäße Vorrichtung zur Sicherheitsprüfung von Gegenständen in einer schematischen Seitenansicht und
- Fig. 2: diese Vorrichtung in einer Draufsicht.

Die dargestellte Vorrichtung zur Sicherheitsprüfung von Gegenständen weist eine Bilderfassungseinrichtung 1 auf, an der die von Behältern aufgenommenen, zu erfassenden Gegenstände mit Hilfe einer Fördereinrichtung 2 vorbeigefördert werden. Diese Fördereinrichtung 2 setzt sich aus einer Förderstrecke 3 und einer unterhalb der Förderstrecke 3 vorgesehenen Rücklaufstrecke 4 zusammen, die über eine Umlenkstrecke 5 miteinander verbunden sind. Die Anordnung ist dabei so getroffen, dass der Förderstrecke 3 bezüglich der Bilderfassungseinrichtung 1 ein Aufgabeabschnitt 6 vorgeordnet und ein Entnahmeabschnitt 7 nachgeordnet ist, an den sich die Umlenkstrecke 5 anschließt. Zwischen der sich zumindest um 180**°** erstreckenden Umlenkstrecke 5 und der Rücklaufstrecke 4 ist eine gegen die Rücklaufstrecke 4 abfallende Verbindungsstrecke 8 vorgesehen, die die von der Umlenkstrecke 5 kommenden, leeren Behälter auf die Rücklaufstrecke 4 überführt, sodass der Höhenunterschied zwischen der Förderstrecke 3 und der Rücklaufstrecke 4 über die geneigte Verbindungsstrecke 8 ohne Hubeinheit überwunden wird. Zum Anheben der leeren Behälter von der Rücklaufstrecke 4 annähernd auf das Förderniveau der Förderstrecke 3 ist die Rücklaufstrecke 4 mit einem gegen den Aufgabeabschnitt 6 der Förderstrecke 3 ansteigenden Endabschnitt 9 versehen, der über den Aufgabeabschnitt 6 der Förderstrecke 3 vorragt, sodass die rückgeförderten, leeren Behälter von Hand aus ohne Schwierigkeiten dem vorstehenden Endabschnitt 9 der Rücklaufstrecke 4 entnommen und auf den Aufgabeabschnitt 6 der Förderstrecke 3 überführt werden können. Der Endabschnitt 9 der Rücklaufstrecke 4 kann dabei in einen Behälterspeicher übergehen, dem dann bei Bedarf die leeren Behälter entnommen werden.

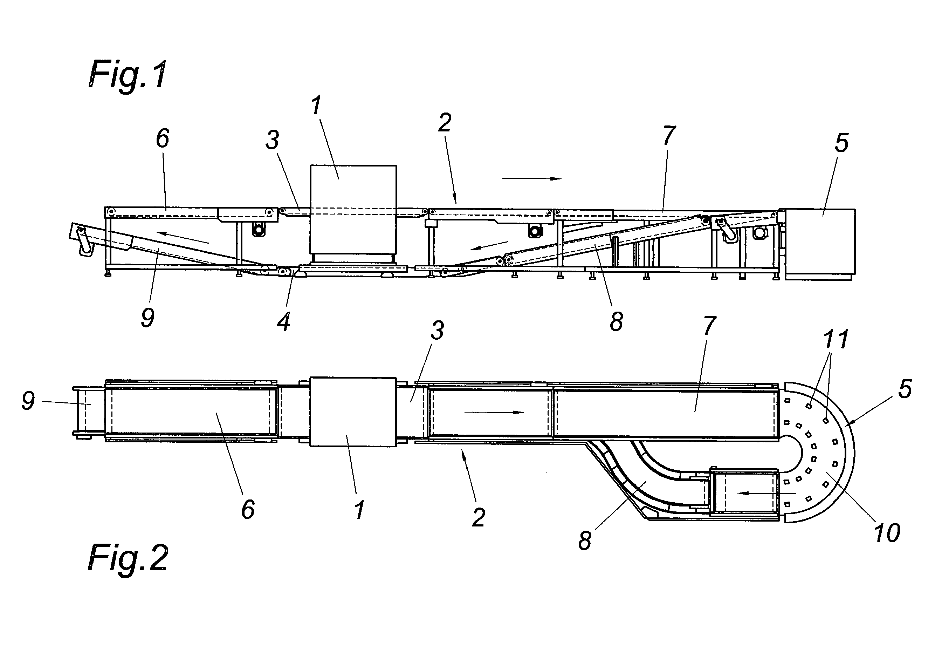

Gemäß dem Ausführungsbeispiel sind die Förderstrecken der Fördereinrichtung 2 mit Ausnahme der Umlenkstrecke 5 als endlos umlaufende Förderbänder ausgeführt, was zwar vorteilhaft, aber nicht zwingend ist. Da die Umlenkstrecke 5 ein gegenüber der Förderstrecke 3 seitlich versetztes, ablaufseitiges Ende aufweist, wie dies der Fig. 2 entnommen werden kann, ist die Verbindungsstrecke 8 so auszuführen, dass sie ablaufseitig in die Rücklaufstrecke 4 übergeht. Dies kann entsprechend der Fig. 2 durch einen entsprechenden Kurvenverlauf der Verbindungsstrecke 8 erreicht werden.

Obwohl die Umlenkstrecke 5 ebenfalls als Bandförderer ausgebildet werden kann, bietet die Ausbildung der Umlenkstrecke 5 als Rollmatte besondere Vorteile, insbesondere dann, wenn die Umlenkstrecke 5 zumindest teilweise als Verlängerung des Entnahmeabschnitts 7 der Förderstrecke 3 genützt wird, weil sich aufgrund dieser Ausbildung der Umlenkstrecke 5 eine im Wesentlichen geschlossene Tischfläche 10 ergibt, aus der die einzelnen Rollkörper 11 geringfügig vorstehen.

## Patentansprüche

1. Vorrichtung zur Sicherheitsüberprüfung von Gegenständen mit einer Bilderfassungseinrichtung (1) für die Gegenstände und einer Fördereinrichtung (2) für die Gegenstände aufnehmende Behälter, wobei die Fördereinrichtung (2) eine Förderstrecke mit einem der Bilderfassungseinrichtung (1) vorgeordneten Aufgabeabschnitt (6) und einem der Bilderfassungseinrichtung (1) nachgeordneten Entnahmeabschnitt (7) sowie eine unterhalb der Förderstrecke (3) vorgesehene Rücklaufstrecke für die leeren Behälter aufweist, **dadurch gekennzeichnet, dass** die Fördereinrichtung (2) eine an den Entnahmeabschnitt (7) der Förderstrecke (3) angeschlossene, um zumindest 180**°** geführte Umlenkstrecke (5) mit einer zur Rücklaufstrecke (4) abfallenden Verbindungsstrecke (8) bildet und dass die Rücklaufstrecke (4) einen gegen den Aufgabeabschnitt (6) der Förderstrecke (3) ansteigenden, diesem gegenüber vorstehenden Endabschnitt (9) umfasst.

2. Vorrichtung nach Anspruch 1, **dadurch gekennzeichnet, dass** die Umlenkstrecke (5) der Fördereinrichtung (2) als Rollmatte ausgebildet ist.
